(19) Europäisches Patentamt / European Patent Office / Office européen des brevets

(11) **EP 2 188 608 B1**

(12) **EUROPÄISCHE PATENTSCHRIFT**

(45) Veröffentlichungstag und Bekanntmachung des Hinweises auf die Patenterteilung:
**09.11.2016   Patentblatt 2016/45**

(21) Anmeldenummer: **08803485.5**

(22) Anmeldetag: **01.09.2008**

(51) Int Cl.:
**G01M 3/20** *(2006.01)*

(86) Internationale Anmeldenummer:
**PCT/EP2008/061507**

(87) Internationale Veröffentlichungsnummer:
**WO 2009/033978 (19.03.2009 Gazette 2009/12)**

(54) **SCHNÜFFELLECKSUCHER**

SNIFFING LEAK DETECTOR

DÉTECTEUR DE FUITE POUR RENIFLARD

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.09.2007   DE 102007043382**

(43) Veröffentlichungstag der Anmeldung:
**26.05.2010   Patentblatt 2010/21**

(73) Patentinhaber: **Inficon GmbH**
**50968 Köln (DE)**

(72) Erfinder:
• **WETZIG, Daniel**
  **50999 Köln (DE)**
• **MEBUS, Stefan**
  **50733 Köln (DE)**

• **ROLFF, Norbert**
  **50169 Horrem (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
| | |
|---|---|
| **EP-A- 0 475 246** | **EP-A- 0 534 825** |
| **WO-A-90/14587** | **WO-A-99/10721** |
| **WO-A-02/075268** | **DE-A1-102005 021 909** |
| **US-A- 5 417 105** | **US-B1- 6 314 793** |

## Beschreibung

Die Erfindung betrifft einen Schnüffellecksucher mit einer Schnüffelsonde, die über eine zu einem Prüfgassensor führende erste Saugleitung mit einem Hauptgerät verbunden ist, welches eine Vakuum-Pumpvorrichtung enthält.

Bei der Dichtheitsprüfung von Behältern und Rohrsystemen wird üblicherweise Helium als Prüfgas benutzt und das Austreten von Helium wird mit einem Massenspektrometer oder einem anderen Prüfgassensor nachgewiesen.

DE 10 2005 021 909 A1 (INFICON) beschreibt einen Schnüffellecksucher mit einer Schnüffelsonde, die von Hand geführt werden kann, um ein Testobjekt auf Leckstellen zu untersuchen, aus denen Prüfgas austritt. Die Schnüffelsonde ist über eine flexible Schnüffelleitung mit einem Hauptgerät verbunden, welches den Prüfgassensor und die erforderliche Vakuum-Pumpvorrichtung enthält.

In DE 10 2005 009 713 A1 (INFICON) ist ein Lecksuchgerät mit Schnüffelsonde beschrieben, bei dem die Schnüffelsonde über eine Schlauchleitung, die mindestens zwei Kapillarleitungen enthält, mit dem Hauptgerät verbunden ist. Die Kapillarleitungen sind durch Ventile einzeln oder gruppenweise zu schließen. Durch Auswahl einer gewünschten Anzahl von Kapillarleitungen kann die Größe des in die Schnüffelsonde eingesogenen Fördergasstroms verändert werden. So ist es möglich, den Fluss in die Schnüffelsonde groß zu wählen, so dass die Ansprechzeit minimal wird und auch aus größerer Entfernung noch Luft in ausreichender Menge in die Schnüffelsonde aufgenommen wird. Die kleinste nachweisbare Leckrate entspricht der kleinsten detektierbaren Prüfgaskonzentration. Somit verschlechtert sich die kleinste nachweisbare Leckrate mit zunehmendem Gasfluss in die Schnüffelsonde. Durch Verwendung mehrerer Kapillaren wird erreicht, dass für die jeweilige Anwendung ein jeweils geeigneter Gasfluss gewählt werden kann, ohne die Schlauchleitung wechseln zu müssen. Die Konzentration des Prüfgases im eingesogenen Gasstrom ist ein Maß für die Leckrate. Zur genauen Bestimmung der Leckrate muss während der Messung das gesamte aus einem Leck ausströmende Gas aufgesogen werden. Je größer der eingesogene Fördergasstrom ist, umso höher ist die Abstandsempfindlichkeit. Unter Abstandsempfindlichkeit wird die Fähigkeit verstanden, eine Leckdetektion in größerem Abstand von dem Prüfobjekt zu ermöglichen. Im Gegensatz hierzu steht die Empfindlichkeit. Diese ist umso größer, je kleiner die gerade noch feststellbare Leckrate ist. Es sind zwei Schwierigkeiten zu lösen. Einen großen Gasstrom durch die Saugleitung zu führen, stellt erhöhte Anforderungen an das Leitungs- und Pumpsystem.

Andererseits sollen eine hohe Abstandsempfindlichkeit und eine hohe Empfindlichkeit gewährleistet sein.

Ein Schnüffellecksucher, von dem der Oberbegriff des Patentanspruchs 1 ausgeht, ist beschrieben in US 5,417,105 A. Dieser Schnüffellecksucher weist einen den Schnüffelschlauch mit Abstand umgebenden Saugschlauch auf, welcher an seinem rückwärtigen Ende mit einer Saugvorrichtung mit Venturidüse verbunden ist. Die in den Saugschlauch eingesaugte Luft wird wieder in die Umgebung abgelassen. Ein Handgriff ist weder am Schnüffelschlauch noch am Saugschlauch vorgesehen. Die Saugvorrichtung bildet einen Strömungsbeschleuniger, der die zur Lokalisierung eines kleinen Gaslecks erforderliche Zeit reduziert.

Ein weiterer bekannter Schnüffellecksucher ist beschrieben in DE 10 2005 021 909 A1. Dieser Schnüffellecksucher enthält in einem Hauptgerät, an das eine Schnüffelsonde mit einem Schlauch angeschlossen ist, eine zweistufige Pumpvorrichtung, deren Sauganschluss abwechselnd mit der Schnüffelsonde und mit einem ebenfalls in dem Hauptgerät untergebrachten Gassensor verbindbar ist.

Der Erfindung liegt die Aufgabe zugrunde, einen Schnüffellecksucher zu schaffen, bei dem die erste und die zweite Saugleitung an eine einzige Pumpvorrichtung derart angeschlossen sind, dass unterschiedliche Drücke und unterschiedliche Saugleistungen in beiden Saugleitungen entstehen.

Der erfindungsgemäße Schnüffellecksucher ist durch den Patentanspruch 1 definiert. Er ist dadurch gekennzeichnet, dass im Hauptgerät eine Pumpvorrichtung aus Hochvakuumpumpe und Vorvakuumpumpe zur Erzeugung eines Hochvakuums für den Prüfgassensor vorgesehen ist, und dass die zweite Saugleitung mit der Vorvakuumpumpe verbunden ist.

Ein Merkmal der Erfindung besteht darin, dass der Schnüffellecksucher imstande ist, wahlweise einen großen und einen kleinen Gasfluss zu erzeugen. Damit wird in einem Fall eine große Menge Gas in die Schnüffelsonde eingesogen. Der größere Anteil dieses Gases wird anschließend in die Umgebung wieder abgeblasen. Aus dem großen Gasstrom wird mit der ersten Saugleitung ein Teil des angesaugten Gasstromes entnommen. Die Prüfgas-Konzentration wird von der Analyseeinheit ermittelt und aus der gemessenen Konzentration wird die Leckrate bestimmt. Die Förderkapazität gibt die Saugleistung der jeweiligen Saugleitung unter Berücksichtigung der Saugleistung der angeschlossenen Saugpumpe an, also den Fördergasstrom in der betreffenden Saugleitung.

Zur Umschaltung des Schnüffellecksuchers auf "Normalbetrieb" wird die zweite Saugleitung abgesperrt, was entweder durch Betätigung des Absperrorgans erfolgen kann oder durch Abschalten der angeschlossenen Gasförderpumpe. Der Gasstrom wird dann ausschließlich durch die zu dem Prüfgassensor führende erste Saugleitung gefördert. Beträgt der Gasstrom bei Normalbetrieb beispielsweise nur 10% des großen Fördergasstromes, so ist die Konzentration während des Normalbetriebes zehnfach größer und damit die Empfindlichkeit ebenfalls zehnfach höher.

Die Gasförderpumpe ist Bestandteil der Vakuum-Pumpvorrichtung, die das erforderliche Vakuum für den Prüfgassensor erzeugt. Eine solche Pumpvorrichtung besteht aus Hochvakuumpumpe und Vorvakuumpumpe, wobei die zweite Saugleitung an den Saugeinlass der Vorvakuumpumpe angeschlossen ist.

Im Folgenden werden unter Bezugnahme auf die Zeichnungen Ausführungsbeispiele der Erfindung näher erläutert.

Es zeigen:

Figur 1    eine schematische Darstellung einer nicht zur Erfindung gehörenden ersten Ausführungsform mit Unterbringung der Gasförderpumpe im Handgriff der Schnüffelsonde und

Figur 2    eine zweite Ausführungsform, bei der die Gasförderpumpe im Hauptgerät untergebracht ist.

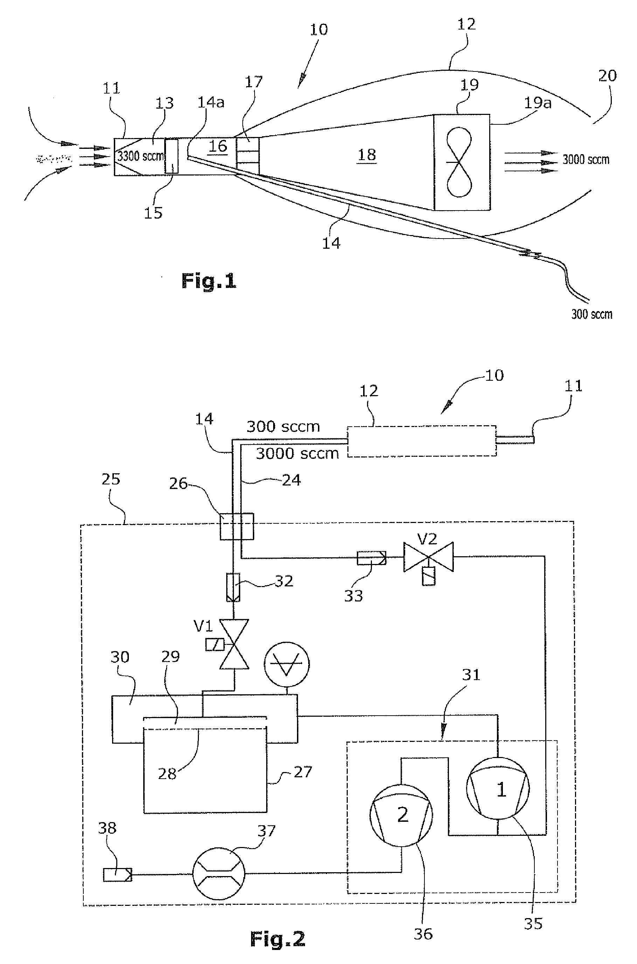

In Figur 1 ist eine Schnüffelsonde 10 dargestellt, die eine Schnüffelspitze 11 und einen Handgriff 12 aufweist. Von der Schnüffelspitze 11 führt ein Kanal 13 zu dem Einlassende 14a einer ersten Saugleitung 14. Die Saugleitung 14 besteht aus einer flexiblen Kapillare, die mit einem Hauptgerät verbunden ist, welches in Figur 1 nicht dargestellt ist. Das Hauptgerät entspricht im Wesentlichen demjenigen von DE 10 2005 021 909 A1 (INFICON). Es enthält einen Prüfgassensor und eine Vakuum-Pumpvorrichtung sowie die erforderlichen Steuerorgane und Stellelemente.

Der Kanal 13 enthält hinter einem Filter 15 einen Verteilerraum 16, in dem sich das Einlassende 14a der ersten Saugleitung 14 befindet. Der Verteilerraum 16 ist über ein Absperrorgan 17 in Form eines steuerbaren Ventils mit einer zweiten Saugleitung 18 verbunden, an die eine Gasförderpumpe 19 angeschlossen ist. Der Auslass 19a der Gasförderpumpe 19 führt in die Umgebung. Die Saugleitung 18 und die Gasförderpumpe 19 sind im Inneren des Handgriffs 12 angeordnet, der eine Öffnung 20 aufweist, durch die das Gas in die Umgebung ausgeblasen wird.

Wenn die Schnüffelspitze 11 in die Nähe eines Testobjekts gehalten wird, aus dem ein Prüfgas, z. B. Helium, austritt, saugt sie ein Gemisch aus Prüfgas und Außenluft ein. Das Einsaugen erfolgt einerseits durch die erste Saugleitung 14 und andererseits durch die an die zweite Saugleitung 18 angeschlossene Gasförderpumpe 19. Die jeweiligen Gasmengen sind in Figur 1 als Beispiel angegeben. Die gesamte eingesaugte Gasmenge betrage 3300 sccm (Standard-Kubikzentimeter). Dieser Gasstrom teilt sich auf in einen großen Gasstrom von 3000 sccm durch die Gasförderpumpe 19 und einen kleineren Gasstrom von 300 sccm durch die Saugleitung 14. In diesem Fall beträgt das Mengenverhältnis 11:1. Es sollte mindestens 5:1 betragen.

Wenn das Absperrorgan 17 geöffnet ist, ergibt sich eine hohe Abstandsempfindlichkeit, weil der Fördergasstrom hoch ist. Die Konzentration des Prüfgases im Gasstrom wird wie folgt berechnet:

$$c = \frac{Q_{Leck}}{Q_{Fördergasstrom}} + c_0$$

$c$:                    Prüfgaskonzentration im Gasstrom

$c_0$:                  Prüfgaskonzentration in der Luft

$Q_{Leck}$:              Leckrate am Prüfling

$Q_{Fördergasstrom}$:    In die Schnüffelspitze eingesogener Fördergasstrom

Die Prüfgaskonzentration im Gasstrom wird bestimmt vom Verhältnis zwischen vorhandener Leckrate und dem Fördergasstrom. $c_0$ beschreibt die Grundkonzentration, die im Fördergasmedium bereits vorhanden ist (z. B. 5 ppm He in Luft).

Die Information der Leckrate wird von der Analyseeinheit im Hauptgerät über die Messung der Prüfgaskonzentration im geförderten Gasstrom bestimmt. Da die Konzentration im Handgriff homogen verteilt ist, kann eine Flussteilung bereits im Verteilerraum 16 im Handgriff erfolgen, ohne dass Information zur Leckrate verloren geht.

Figur 2 zeigt ein Ausführungsbeispiel der Erfindung, bei dem die Schnüffelsonde 10 ebenfalls einen Handgriff 12 mit Schnüffelspitze 11 aufweist. Von der Schnüffelsonde 10 führt eine erste Saugleitung 14 kleinen Durchmessers zu dem Hauptgerät 25 und eine zweite Saugleitung 24 führt ebenfalls zu dem Hauptgerät. Beide Saugleitungen 14,24 sind mittels eines Steckverbinders 26 lösbar mit dem Hauptgerät verbunden.

Das Hauptgerät 25 enthält einen Prüfgassensor 27, der eine selektiv für das Prüfgas durchlässige Membran 28 aufweist, welche an einen Gasführungsraum 29 angrenzt. Dieser befindet sich in einem Saugraum 30, der an eine Vakuum-Pumpvorrichtung 31 angeschlossen ist. Die erste Saugleitung 14 führt im Hauptgerät 25 über einen Filter 32 und ein Ventil V1 in den Gasführungsraum 29. Die zweite Saugleitung 24 führt über einen Filter 33 und ein Absperrorgan V2 zu der Vakuum-Pumpvorrichtung 31. Die Pumpvorrichtung enthält eine Hochvakuumpumpe 35 und eine Vorvakuumpumpe 36, die hintereinander geschaltet sind. Die zweite Saugleitung 24 ist mit dem Saugeinlass der Vorvakuumpumpe 36 verbunden. Der Saugeinlass der Hochvakuumpumpe 35 ist mit dem Saugraum 30 verbunden.

Der Auslass der Vorvakuumpumpe 36 ist über einen Flusssensor 37 und einen Filter 38 mit der Umgebung verbunden, so dass das angesaugte Gas ausgeblasen wird.

Auch in Figur 2 sind die Gasmengen der Saugleitungen 14 und 24 als Beispiel eingetragen.

Mit dem erfindungsgemäßen Schnüffellecksucher werden zwei Betriebszustände kombiniert, die sowohl eine hohe Empfindlichkeit als auch eine hohe Abstandsempfindlichkeit ermöglichen. Während des Betriebs des Gerätes mit dem Standardfluss, also bei gesperrtem Absperrorgan 17 oder V2, werden die gewohnten Spezifikationen des Gerätes erreicht. Nach dem Öffnen des Absperrorgans, d.h. nach dem Umschalten des Gerätes auf großen Fluss, ist das Gerät zusätzlich empfindlich für austretendes Gas in größerer Entfernung. Es ist also möglich, zunächst mit großem Gasdurchsatz Lecks zu suchen und so mit besserer Abstandsempfindlichkeit ein Leck aufzufinden und es anschließend mit reduziertem Fluss exakt quantitativ zu bestimmen.

## Patentansprüche

1. Schnüffellecksucher mit einer Schnüffelsonde (10), die über eine zu einem Prüfgassensor (27) führende erste Saugleitung (14) mit einem Hauptgerät (25) verbunden ist, welches eine Vakuum-Pumpvorrichtung (31) enthält, wobei die Schnüffelsonde (10) mit einer zweiten Saugleitung (24) versehen ist, die eine höhere Förderkapazität hat als die erste Saugleitung (14), wobei die zweite Saugleitung absperrbar ist und ohne eine Verbindung zu dem Prüfgassensor (27) direkt mit einer in die Umgebung fördernden Vorvakuumpumpe (36), die in dem Hauptgerät (25) enthalten ist, verbunden ist,
   **dadurch gekennzeichnet,**
   **dass** im Hauptgerät (25) eine Pumpvorrichtung (31) aus einer Hochvakuumpumpe (35) und der Vorvakuumpumpe (36), die hintereinander geschaltet sind, zur Erzeugung eines Hochvakuums für den Prüfgassensor (27) vorgesehen ist.

2. Schnüffellecksucher nach Anspruch 1, **dadurch gekennzeichnet, dass** die Förderraten der zweiten und der ersten Saugleistung (24,14) sich mindestens im Verhältnis 5:1 zueinander verhalten, vorzugsweise im Verhältnis 10:1.

3. Schnüffellecksucher nach Anspruch 1, **dadurch gekennzeichnet, dass** sich der Prüfgassensor (27) im Hauptgerät (25) befindet.

## Claims

1. A sniffing leak detector comprising a sniffing probe (10) which, via a first suction line (14) leading to a test gas sensor (27), is connected to a main device (25) including a vacuum pump device (31),
   wherein the sniffing probe (10) is provided with a second suction line (24) which has a higher conveying capacity than the first suction line (14), said second suction line being adapted to be shut off and, without connection to the test gas sensor (27), being directly connected to a pre-vacuum pump (36) for conveying into the environment, said pre-vacuum pump being included in the main device (25),
   **characterized in**
   **that**, within the main device (25), a pump device (31) comprising a high-vacuum pump (35) and said pre-vacuum pump (36) in serial arrangement is provided for generating a high vacuum for the test gas sensor (27).

2. The sniffing leak detector according to claim 1, **characterized in that** the conveying rates of the second and first suction lines (24,14) have a mutual ratio of at least 5:1, preferably 10:1.

3. The sniffing leak detector according to claim 1, **characterized in that** the test gas sensor (27) is arranged in the main device (25).

## Revendications

1. Détecteur de fuite à reniflement avec une sonde de reniflement (10) qui est reliée, via un premier conduit d'aspiration (14) menant à un capteur de gaz de test (27), à un appareil principal (25) qui comprend un dispositif de pompe à vide (31),
   la sonde de reniflement (10) étant pourvue d'un second conduit d'aspiration (24) qui a une capacité de transport plus élevée que le premier conduit d'aspiration (14), le second conduit d'aspiration étant apte à être bloqué et étant relié, sans liaison au capteur de gaz de vérification (27), directement à une pré-pompe à vide (36) évacuant dans l'entourage qui est comprise dans l'appareil principal (25),
**caractérisé en ce**
**qu'**un dispositif de pompage (31) formé par une pompe à vide poussé (35) et la pré-pompe à vide (36), qui sont connectées en série, est prévu dans l'appareil principal (25) pour la génération d'un vide poussé pour le capteur de gaz de test (27).

2. Détecteur de fuite à reniflement selon la revendication 1, **caractérisé en ce que** les débits du second et du premier conduits (24, 14) sont au rapport de 5 : 1, de préférence au rapport de 10 : 1.

3. Détecteur de fuite à reniflement selon la revendication 1, **caractérisé en ce que** le capteur de gaz de test (27) est situé dans l'appareil principal (25).

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005021909 A1
- DE 102005009713 A1

- US 5417105 A